# EUROPÄISCHE PATENTSCHRIFT

(11) **EP 0 890 768 B1**
(45) Veröffentlichungstag und Bekanntmachung des Hinweises auf die Patenterteilung: **18.08.2004**
(21) Anmeldenummer: 98110747.7
(22) Anmeldetag: 12.06.1998
(51) Int. Cl.: F16L 9/06, F16L 11/15, B67D 5/00, B67D 5/60

(54) **Leitungsrohr für den Transport flüssiger oder gasförmiger Medien**
Pipe for conveying liquid or gaseous media
Tuyau pour le transport de fluides ou de gaz

(30) Priorität: 12.06.1997 DE 29710258 U
(43) Veröffentlichungstag der Anmeldung: 13.01.1999
(73) Patentinhaber: BRUGG Rohr AG, Holding, 5200 Brugg (CH)
(72) Erfinder: Friessner, Jürgen, 30900 Wedemark (DE); Bittner, Herbert, 31515 Wunstorf (DE)

(56) Entgegenhaltungen:
- WO-A-95/09999
- DE-A- 19 504 616
- FR-A- 2 141 666
- GB-A- 2 081 415
- US-A- 3 538 209
- US-A- 5 089 074
- US-A- 5 349 988
- US-A- 5 580 186

## Beschreibung

Die Erfindung betrifft ein Leitungsrohr für den Transport flüssiger oder gasförmiger Medien bestehend aus einem gewellten Innenrohr (1) und einem auf dem gewellten Innenrohr (1) aufliegenden Kunststoffmantel (2).

Aus der DE-A-33 02 450 ist ein Leitungsrohr bekannt, welches aus einem schraubenlinienförmig gewellten Metallrohr, einer auf dem Metallrohr aufliegenden, die Wellkontur ausfüllenden Korrosionsschutzschicht auf der Basis von Bitumen sowie einem auf dem Innenrohr bzw. der Korrosionsschutzschicht aufliegenden Außenmantel aus Kunststoff besteht.

Ein solches Rohr kann in großen Längen hergestellt werden und ist so flexibel, daß es wie ein elektrisches Kabel auf transportable Kabeltrommeln aufgewickelt werden kann bzw. zu einem Ringbund gewickelt werden kann. Es wird entweder auf einer Kabeltrommel oder als Ringbund zu seinem Einsatzort transportiert und kann dort wie ein elektrisches Kabel verlegt werden.

Um ein solches Rohr an eine Armatur anschließen zu können, ist es erforderlich, das Ende des Innenrohres freizulegen. Dazu muß der Mantel sowie die Korrosionsschutzschicht entfernt werden. Dies ist ein sehr zeitaufwendiger Vorgang. Ein weiterer Nachteil des bekannten Leitungsrohres besteht darin, daß die die Wellentäler ausfüllende Korrosionsschutzmasse sowie der glatte Kunststoffmantel die Biegbarkeit stark beeinflussen. Infolgedessen ist mit diesen Leitungsrohr nur ein Biegeradius von höchstens 5D zu erzielen., d. h. der fünffache Außendurchmesser.

Aus der US 3 538 209 ist ein doppelwandiges Kunststoffrohr mit einer ring- oder schraubenlinienförmig gerillten Außenwand und einer glatten Innenwand bekannt. Das gerillte Außenrohr kann noch mit einem glatten äußeren Rohr aus Kunststoff umspritzt werden.

Die US 5 580 186 offenbart ein Leitungsrohr zur Fortleitung von Fluiden, welches aus einem inneren Rohr für das zu transportierende Medium besteht, welches von einem äußeren Rohr umgeben ist. Das innere Rohr ist ein Kunststoffwellrohr, auf dessen Wellenkuppen ein weiteres Kunststoffrohr aufliegt, so daß zwischen dem Innenrohr und dem weiteren Kunststoffrohr ein schraubenlinienförmig verlaufender Kanal entsteht. Um dieses Gebilde mit Abstand herumgelegt ist ein Außenrohr, welches ebenfalls als Kunststoffwellrohr ausgebildet ist. Der zwischen dem Innenrohr und dem Außenrohr befindliche Ringspalt kann zur Leckerkennung herangezogen werden.

Die GB-A-2081415 offenbart ein flexibles thermisch isoliertes Leitungsrohr, welches aus einem inneren Kupferrohr, einer thermischen Isolierschicht sowie einem Außenmantel besteht. Die Isolierschicht weist eine erste Lage aus Kreppapier, ein längsgeschlitztes gewelltes Kunststoffrohr, sowie eine Bandbewicklung auf. Der Außenmantel weist innere Längsrippen auf, welche Wärmeverluste vermeiden sollen.

Der Erfindung liegt von daher die Aufgabe zugrunde, ein Leitungsrohr anzugeben, welches eine bessere Biegbarkeit als das bekannte Leitungsrohr aufweist und welches sich wesentlich schneller und ohne größeren Aufwand an eine Armatur anschließen läßt.

Diese Aufgabe wird durch die Merkmale a) bis c) des Anspruchs 1 gelöst.

Weitere vorteilhafte Ausgestaltungen der Erfindung sind in den Unteransprüchen erfaßt.

Neben den sich aus der Aufgabenstellung direkt ergebenden Vorteilen ergibt sich noch der Vorteil, daß das erfindungsgemäße Leitungsrohr auf Leckagen hin überwacht werden kann. Der zwischen dem Innenrohr und dem Kunststoffaußenmantel befindliche Hohlraum wird hierzu mit einem Drucküberwachungsgerät verbunden.

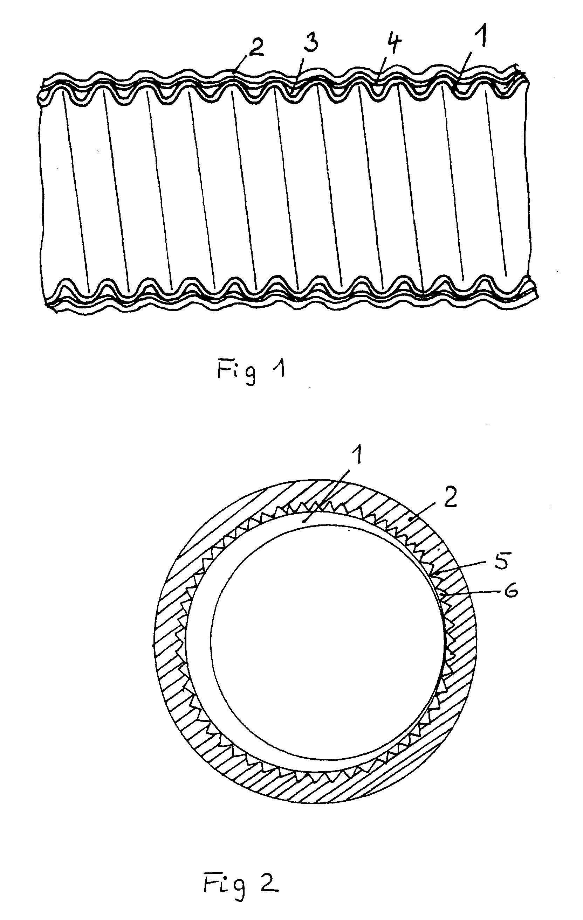

Die Erfindung wird anhand der in den Figuren 1 und 2 schematisch dargestellten Ausführungsbeispiele näher erläutert.

Das Leitungsrohr besteht aus einem gewellten Innenrohr 1 sowie einem auf dem Innenrohr 1 aufliegenden Kunststoffmantel 2. Zwischen dem Innenrohr 1 und dem Kunststoffmantel 2 verbleibt ein Hohlraum 3. Nach einer bevorzugten Ausführungsform der Erfindung ist das Innenrohr 1 ein schraubenlinienförmig gewelltes Metallrohr, vorzugsweise aus einem korrosionsbeständigen Werkstoff wie Kupfer oder Edelstahl. Solche gewellten Metallrohre lassen sich durch Formen eines Metallbandes zum Schlitzrohr, Verschweißen des Schlitzrohres und Wellen des Rohres in kontinuierlicher Arbeitsweise in nahezu unendlichen Längen herstellen.

Durch die schraubenlinienförmige Wellung des Innenrohres 1 entsteht ein Hohlraum 3, der schraubenlinienförmig über die Rohrlänge verläuft. Wird der Hohlraum 3 mit einem nicht dargestellten Drucküberwachungsgerät verbunden, entsteht ein überwachbarer Hohlraum 3, d. h. Druckschwankungen im Hohlraum 3, die aus einem Leck im Innerrohr 1 oder im Kunststoffmantel 2 herrühren, können erfaßt und gemeldet werden. Das Leitungsrohr ist deshalb ganz besonders zum Transport umweltgefährdender Medien wie Kohlenwasserstoffe, Säuren, Abwässer etc. geeignet.

Zwischen dem Innenrohr 1 und dem Kunststoffmantel 2 befindet sich eine Folie 4, die den Durchtritt von Gasen oder Dämpfen durch den nicht diffusionsdichten Kunststoffmantel 2 verhindern soll. Als Material für die Folie 4 eignen sich Polyvinylalkohol, Ethylenvinylalkohol, Polyvinylidenfluorid etc. Durch die Verwendung eines metallischen Innenrohres 1 sowie eines Mantels aus einer diffusionsdichten Folie 4 und eines Kunststoffmantels 2 entsteht ein diffusionsdichter Hohlraum 3.

Die Folie 4 wird bevorzugt wendelförmig auf das Innenrohr 1 aufgewickelt und zwar mit einer bestimmten Vorspannung, so daß sich die Folie 4 in die Wellentäler einformt. Beim anschließenden Extrudieren des Kunststoffmantels 2 formt sich dieser an die Folie 4 an, wobei sich eine wellenartige Kontur des Kunststoffmantels 2 ergibt.

In Figur 2 ist ein weiteres Ausführungsbeispiel nach der Lehre der Erfindung dargestellt.

Auf den Wellenbergen des Innenrohres 1 stützen sich eine Vielzahl von Rippen 5 ab, die sich radial nach innen von der Innenoberfläche des Kunststoffmantels 2 erstrecken. Die zwischen den Rippen entstandenen Längskanäle 6 verbessern noch die Durchlässigkeit für Gase und Flüssigkeiten in Längsrichtung des Rohres. In den Längskanälen 6 kann u. U. aus dem Innenrohr 1 ausgetretenes Medium abgeleitet werden.

## Patentansprüche

1. Leitungsrohr für den Transport flüssiger oder gasförmiger Medien, bestehend aus einem gewellten Innenrohr (1) und einem auf dem gewellten Innenrohr (1) aufliegenden Kunststoffmantel (2), wobei
a) das Innenrohr (1) ein schraubenlinienförmig gewelltes Metallrohr ist,
b) der Kunststoffmantel (2) eine Vielzahl von nach innen weisenden im wesentlichen im Querschnitt dreieckförmige Rippen (5) aufweist und zwischen den Rippen (5) und dem Metallrohr (1) Längskanäle (6) vorgesehen sind,
c) der Kunststoffmantel derart auf dem gewellten Metallrohr (1) aufliegt, daß das Kunststoffmaterial zwischen zwei Wellenkuppen radial nach innen geformt ist und sich eine wellenartige Kontur des Kunststoffmantels (2) ergibt und im Wellental ein schraubenlinienförmiger Hohlraum (3) zwischen dem Metallrohr (1) und dem Kunststoffmantel (2) verbleibt.

2. Leitungsrohr nach einem der Ansprüche 1 bis 3, **dadurch gekennzeichnet, daß** zwischen dem Innenrohr (1) und dem Kunststoffmantel (2) eine Kunststofffolie (4) angeordnet ist.

3. Leitungsrohr nach Anspruch 2, **dadurch gekennzeichnet, daß** die Kunststofffolie (4) aus einem diffusionsdichten Kunststoffmaterial wie z. B. Polyvinylalkohol, Ethylenvinylalkohol, Polyvinylidenfluorid etc. besteht.

4. Leitungsrohr nach einem der Ansprüche 2 bis 3, **dadurch gekennzeichnet, daß** die Kunststofffolie (4) mit Vorspannung auf das Innenrohr (1) aufgebracht ist.

5. Leitungsrohr nach einem der Ansprüche 1 bis 4, **dadurch gekennzeichnet; daß** der zwischen dem Innenrohr (1) und dem Kunststoffmantel (2) befindliche Hohlraum (3) mit einem Veränderungen des Druckes im Hohlraum (3) feststellenden Überwachungsgerät verbunden ist.

## Claims

1. Conduit for the transport of fluid or gaseous media comprising a corrugated inner tube (1) and a polymer sleeve (2) applied to the corrugated inner tube (1), wherein
a) inner tube (1) is a helicoidally corrugated metal tube,
b) polymer sleeve (2) has a large number of ribs (5) extend inwards and essentially forming triangles when viewed in cross-section, while there are longitudinal channels (6) between ribs (5) and metal tube (1),
c) the polymer sleeve is applied to corrugated metal tube (1) in such a way that the polymer material is shaped radially inwards between two corrugation crests and so that a corrugated contour forms in polymer sleeve (2) and a helicoidal cavity (3) is obtained between metal tube (1) and polymer sleeve (2).

2. Conduit according to Claim 1, **characterized by** the fact that polymer film (4) is arranged between inner tube (1) and polymer sleeve (2).

3. Conduit according to Claim 2, **characterized by** the fact that polymer film (4) comprises a diffusion-proof polymer material such as polyvinyl alcohol, ethylenevinyl alcohol, polyvinylide fluoride, etc.

4. Conduit according to one of the Claims 2 through 3, **characterized by** the fact that preliminary tension is used to apply polymer film (4) to inner tube (1).

5. Conduit according to one of the Claims 1 through 4, **characterized by the fact that** cavity (3) located between inner tube (1) and polymer sleeve (2) is connected to a monitoring device capable of detecting pressure changes in cavity (3).

## Revendications

1. Conduite pour le transport de fluides liquides ou gazeux, comprenant un tuyau intérieur ondulé (1) et une gaine plastique (2) reposant sur le tuyau intérieur ondulé (1), dans lequel
a) le tuyau intérieur (1) est un tuyau métallique ondulé en forme d'hélice,
b) la gaine plastique (2) présente une multitude de cannelures (5) avec sections transversales en forme de triangle orientés vers l'intérieur pour l'essentiel et des canaux longitudinaux (6) sont prévus entre les cannelures (5) et le tuyau métallique (1),
c) la gaine en plastique repose sur le tuyau métallique ondulé (1) de telle manière que le matériau en plastique est formé radialement vers l'intérieur entre deux sommets d'ondulations et on obtient un contour de type ondulé de la gaine plastique (2) et un espace vide (3) en forme d'hélice subsiste entre le tuyau métallique (1) et la gaine plastique (2) dans le creux des ondulations.

2. Conduite selon la revendication 1, **caractérisée par le fait qu'**un film plastique (4) est disposé entre le tuyau intérieur (1) et la gaine plastique (2).

3. Conduite selon la revendication 2, **caractérisée par le fait que** le film plastique (4) se compose d'un matériau en plastique étanche à la diffusion, tel que de l'alcool polyvinylique, de l'éthylène-alcool vinylique, du fluorure polyvinylidène, etc.

4. Conduite selon l'une quelconque des revendications 2 à 3, **caractérisée par** le faitque le film plastique (4) est appliqué sur le tuyau intérieur (1) avec précontrainte.

5. Conduite selon l'une quelconque des revendications 1 à 4, **caractérisée par le fait que** l'espace vide (3) se trouvant entre le tuyau intérieur (1) et la gaine plastique (2) est relié à un indicateur de pression détectant des variations de pression dans l'espace vide (3).
